(19)

Europäisches Patentamt
European Patent Office
Office européen des brevets

(11)  **EP 3 503 553 A1**

(12)  **EUROPEAN PATENT APPLICATION**
published in accordance with Art. 153(4) EPC

(43) Date of publication:
**26.06.2019 Bulletin 2019/26**

(51) Int Cl.:
*H04N 19/503* (2014.01)    *H04N 19/105* (2014.01)
*H04N 19/136* (2014.01)    *H04N 19/176* (2014.01)
*H04N 19/119* (2014.01)    *H04N 19/70* (2014.01)

(21) Application number: **17853317.0**

(22) Date of filing: **31.08.2017**

(86) International application number:
**PCT/KR2017/009547**

(87) International publication number:
**WO 2018/056603 (29.03.2018 Gazette 2018/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **22.09.2016 US 201662398506 P**

(71) Applicant: **LG Electronics Inc.**
**Seoul 07336 (KR)**

(72) Inventors:
• **PARK, Naeri**
**Seoul 06772 (KR)**
• **LIM, Jaehyun**
**Seoul 06772 (KR)**

(74) Representative: **Maikowski & Ninnemann**
**Patentanwälte Partnerschaft mbB**
**Postfach 15 09 20**
**10671 Berlin (DE)**

(54) **ILLUMINATION COMPENSATION-BASED INTER-PREDICTION METHOD AND APPARATUS IN IMAGE CODING SYSTEM**

(57)    An inter-prediction method according to the present invention comprises the steps of: deriving a movement vector of the current block; deriving a reference block for the current block on the basis of the movement vector; deriving an IC parameter on the basis of first neighboring reference samples of the reference block and second neighboring reference samples of the current block, the IC parameter comprising a scaling factor a, and an offset b; and deriving prediction samples for the current block by carrying out IC for the reference samples of the reference block on the basis of the scaling factor and offset. According to the present invention, inter-prediction efficiency can be effectively increased while reducing the amount of additional data.

FIG. 5

neighboring sample of reference block

neighboring sample of current block

(a)

neighboring sample of reference block

neighboring sample of current block

(b)

**Description**

**BACKGROUND OF THE INVENTION**

Field of the invention

The present invention relates to an image coding technique, and more particularly, to an illumination compensation-based inter-prediction method and device in an image coding system.

Related Art

Demand for high-resolution, high-quality images such as HD (High Definition) images and UHD (Ultra High Definition) images have been increasing in various fields. As the image data has high resolution and high quality, the amount of information or bits to be transmitted increases relative to the legacy image data. Therefore, when image data is transmitted using a medium such as a conventional wired/wireless broadband line or image data is stored using an existing storage medium, the transmission cost and the storage cost thereof are increased.

Accordingly, there is a need for a highly efficient image compression technique for effectively transmitting, storing, and reproducing information of high resolution and high quality images.

**SUMMARY OF THE INVENTION**

The present invention provides a method and device for enhancing image coding efficiency

The present invention also provides a method and device for improving prediction performance

The present invention also provides a method and device for enhancing illumination compensation-based inter-prediction performance.

The present invention also provides a method of efficiently deriving a parameter for illumination compensation, while reducing the amount of data of additional information for the illumination compensation.

In an aspect, an inter-prediction method performed by an encoding device is provided. The method includes detecting a reference block for a current block; deriving a motion vector of the current block; deriving an illumination compensation (IC) parameter based on first neighboring reference samples of the reference block and second neighboring reference samples of the current block, the IC parameter including a scaling factor a and an offset b; performing IC on the reference samples of the reference block based on the scaling factor and the offset to derive prediction samples for the current block; and encoding prediction information and outputting encoded prediction information.

In another aspect, an encoding device for inter-prediction is provided. The encoding device includes: a predictor detecting a reference block for a current block, deriving a motion vector of the current block, and deriving an illumination compensation (IC) parameter based on first neighboring reference samples of the reference block and second neighboring reference samples of the current block, the IC parameter including a scaling factor a and an offset b, and performing IC on the reference samples of the reference block based on the scaling factor and the offset to derive prediction samples for the current block; and an entropy encoder encoding prediction information and outputting encoded prediction information.

In another aspect, an inter-prediction method performed by a decoding device is provided. The method includes: deriving a motion vector of a current block; deriving a reference block for the current block based on the motion vector; deriving an illumination compensation (IC) parameter based on first neighboring reference samples of the reference block and second neighboring reference samples of the current block, wherein the IC parameter includes a scaling factor a and an offset b; and deriving prediction samples for the current block by performing IC on reference samples of the reference block based on the scaling factor and the offset.

In another aspect, a decoding device for inter-prediction is provided. The decoding device includes: a predictor deriving a motion vector of a current block, deriving a reference block for the current block based on the motion vector, the reference block positioned in a reference picture, and deriving an illumination compensation (IC) parameter based on first neighboring reference samples of the reference block and second neighboring reference samples of the current block, wherein the IC parameter includes a scaling factor a and an offset b, and deriving prediction samples for the current block by performing IC on reference samples of the reference block based on the scaling factor and the offset; and a memory storing the reference picture.

According to the present invention, inter-prediction performance may be improved efficiently, while reducing the amount of data of additional information through illumination compensation based on a block structure.

According to the present invention, the amount of data required for residual information may be reduced and overall coding efficiency may be increased.

**BRIEF DESCRIPTION OF THE DRAWINGS**

FIG. 1 is a schematic diagram illustrating a configuration of a video encoding device to which the present invention is applicable.

FIG. 2 is a schematic diagram illustrating a configuration of a video decoding device to which the present invention is applicable.

FIG. 3 illustrates a CU split through a quad tree binary tree (QTBT) structure and a signaling method of the QTBT structure.

FIG. 4 illustrates examples of prediction with or without illumination compensation (IC).

FIG. 5 illustrates examples of neighboring reference samples used for deriving IC parameters.

FIG. 6 illustrates examples of neighboring reference samples used for deriving IC parameters.

FIG. 7 illustrates examples of neighboring reference samples for deriving IC parameters used for non-square blocks.

FIG. 8 illustrates examples of neighboring reference samples including upper right and lower left neighboring reference samples for deriving IC parameters used for non-square blocks.

FIG. 9 illustrates examples of neighboring samples for deriving IC parameters.

FIG. 10 illustrates IC application based on various criteria according to the present invention.

FIG. 11 schematically illustrates an example of an inter-prediction method in image encoding according to the present invention.

FIG. 12 schematically illustrates an example of an inter-prediction method in image decoding according to the present invention.

**DESCRIPTION OF EXEMPLARY EMBODIMENTS**

The present invention may be modified in various forms, and specific embodiments thereof will be described and illustrated in the drawings. However, the embodiments are not intended for limiting the invention. The terms used in the following description are used to merely describe specific embodiments, but are not intended to limit the invention. An expression of a singular number includes an expression of the plural number, so long as it is clearly read differently. The terms such as "include" and "have" are intended to indicate that features, numbers, steps, operations, elements, components, or combinations thereof used in the following description exist and it should be thus understood that the possibility of existence or addition of one or more different features, numbers, steps, operations, elements, components, or combinations thereof is not excluded.

Meanwhile, elements in the drawings described in the invention are independently drawn for the purpose of convenience for explanation of different specific functions, and do not mean that the elements are embodied by independent hardware or independent software. For example, two or more elements of the elements may be combined to form a single element, or one element may be divided into plural elements. The embodiments in which the elements are combined and/or divided belong to the invention without departing from the concept of the invention.

Hereinafter, embodiments of the present invention will be described in detail with reference to the accompanying drawings. In addition, like reference numerals are used to indicate like elements throughout the drawings, and the same descriptions on the like elements will be omitted.

In the present specification, generally a picture means a unit representing an image at a specific time, a slice is a unit constituting a part of the picture. One picture may be composed of plural slices, and the terms of a picture and a slice may be mixed with each other as occasion demands.

A pixel or a pel may mean a minimum unit constituting one picture (or image). Further, a "sample" may be used as a term corresponding to a pixel. The sample may generally represent a pixel or a value of a pixel, may represent only a pixel (a pixel value) of a luma component, and may represent only a pixel (a pixel value) of a chroma component.

A unit indicates a basic unit of image processing. The unit may include at least one of a specific area and information related to the area. Optionally, the unit may be mixed with terms such as a block, an area, or the like. In a typical case, an M×N block may represent a set of samples or transform coefficients arranged in M columns and N rows.

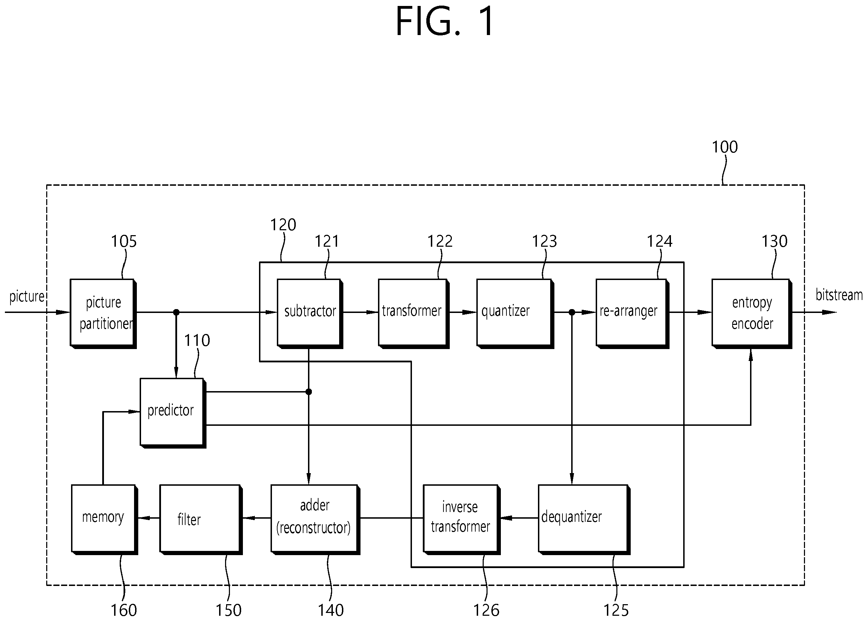

FIG. 1 briefly illustrates a structure of a video encoding device to which the present invention is applicable.

Referring to FIG. 1, a video encoding device 100 may include a picture partitioner 105, a predictor 110, a residual processor 120, an adder 140, a filter 150, and a memory 160. The residual processor 120 may include a subtractor 121, a transformer 122, a quantizer 123, a re-arranger 124, a dequantizer 125, an inverse transformer 126.

The picture partitioner 105 may split an input picture into at least one processing unit.

In an example, the processing unit may be referred to as a coding unit (CU). In this case, the coding unit may be recursively split from the largest coding unit (LCU) according to a quad-tree binary-tree (QTBT) structure. For example, one coding unit may be split into a plurality of coding units of a deeper depth based on a quadtree structure and/or a binary tree structure. In this case, for example, the quad tree structure may be first applied and the binary tree structure may be applied later. Alternatively, the binary tree structure may be applied first. The coding procedure according to the present invention may be performed based on a final coding unit which is not split any further. In this case, the largest coding unit may be used as the final coding unit based on coding efficiency, or the like, depending on image characteristics, or the coding unit may be recursively split into coding units of a lower depth as necessary and a coding unit having an optimal size may be used as the final coding unit. Here, the coding procedure may include a procedure such as prediction, transformation, and reconstruction, which will be described later.

In another example, the processing unit may include a coding unit (CU) prediction unit (PU), or a transform unit (TU). The coding unit may be split from the largest coding unit (LCU) into coding units of a deeper depth according to the quad tree structure. In this case, the largest coding unit may be directly used as the final coding unit based on the coding efficiency, or the like, depending on the image characteristics, or the coding unit may be recursively split into coding units of a deeper depth as necessary and a coding unit having an optimal size may be used as a final coding unit. When the smallest coding unit (SCU) is set, the coding unit may not be split into coding units smaller than the smallest coding unit. Here, the final coding unit refers to a coding unit which is partitioned or split to a prediction unit or a transform unit. The prediction unit is a unit which is partitioned from a coding unit, and may be a unit of sample prediction. Here, the prediction unit may be divided into sub-blocks. The transform unit may be divided from the coding unit according to the quad-tree structure and may be a unit for deriving a transform coefficient and/or a unit for deriving a residual signal from the transform coefficient. Hereinafter, the coding unit may be referred to as a coding block (CB), the prediction unit may be referred to as a prediction block (PB), and the transform unit may be referred to as a transform block (TB). The prediction block or prediction unit may refer to a specific area in the form of a block in a picture and include an array of prediction samples. Also, the transform block or transform unit may refer to a specific area in the form of a block in a picture and include the transform coefficient or an array of residual samples.

The predictor 110 may perform prediction on a processing target block (hereinafter, a current block), and may generate a predicted block including prediction samples for the current block. A unit of prediction performed in the predictor 110 may be a coding block, or may be a transform block, or may be a prediction block.

The predictor 110 may determine whether intra-prediction is applied or inter-prediction is applied to the current block. For example, the predictor 110 may determine whether the intra-prediction or the inter-prediction is applied in unit of CU.

In case of the intra-prediction, the predictor 110 may derive a prediction sample for the current block based on a reference sample outside the current block in a picture to which the current block belongs (hereinafter, a current picture). In this case, the predictor 110 may derive the prediction sample based on an average or interpolation of neighboring reference samples of the current block (case (i)), or may derive the prediction sample based on a reference sample existing in a specific (prediction) direction as to a prediction sample among the neighboring reference samples of the current block (case (ii)). The case (i) may be called a non-directional mode or a non-angular mode, and the case (ii) may be called a directional mode or an angular mode. In the intra-prediction, prediction modes may include as an example 33 directional modes and at least two non-directional modes. The non-directional modes may include DC mode and planar mode. The predictor 110 may determine the prediction mode to be applied to the current block by using the prediction mode applied to the neighboring block.

In case of the inter-prediction, the predictor 110 may derive the prediction sample for the current block based on a sample specified by a motion vector on a reference picture. The predictor 110 may derive the prediction sample for the current block by applying any one of a skip mode, a merge mode, and a motion vector prediction (MVP) mode. In case of the skip mode and the merge mode, the predictor 110 may use motion information of the neighboring block as motion information of the current block. In case of the skip mode, unlike in the merge mode, a difference (residual) between the prediction sample and an original sample is not transmitted. In case of the MVP mode, a motion vector of the neighboring block is used as a motion vector predictor and thus is used as a motion vector predictor of the current block to derive a motion vector of the current block.

In case of the inter-prediction, the neighboring block may include a spatial neighboring block existing in the current picture and a temporal neighboring block existing in the reference picture. The reference picture including the temporal neighboring block may also be called a collocated picture (colPic). Motion information may include the motion vector and a reference picture index. Information such as prediction mode information and motion information may be (entropy) encoded, and then output as a form of a bitstream.

When motion information of a temporal neighboring block is used in the skip mode and the merge mode, a highest picture in a reference picture list may be used as a reference picture. Reference pictures included in the reference picture list may be aligned based on a picture order count (POC) difference between a current picture and a corresponding reference picture. A POC corresponds to a display order and may be discriminated from a coding order.

The subtractor 121 generates a residual sample which is a difference between an original sample and a prediction sample. If the skip mode is applied, the residual sample may not be generated as described above.

The transformer 122 transforms residual samples in units of a transform block to generate a transform coefficient.

The transformer 122 may perform transformation based on the size of a corresponding transform block and a prediction mode applied to a coding block or prediction block spatially overlapping with the transform block. For example, residual samples may be transformed using discrete sine transform (DST) transform kernel if intra-prediction is applied to the coding block or the prediction block overlapping with the transform block and the transform block is a 4×4 residual array and is transformed using discrete cosine transform (DCT) transform kernel in other cases.

The quantizer 123 may quantize the transform coefficients to generate quantized transform coefficients.

The re-arranger 124 rearranges quantized transform coefficients. The re-arranger 124 may rearrange the quantized transform coefficients in the form of a block into a one-dimensional vector through a coefficient scanning method. Although the re-arranger 124 is described as a separate component, the re-arranger 124 may be a part of the quantizer 123.

The entropy encoder 130 may perform entropy-encoding on the quantized transform coefficients. The entropy encoding may include an encoding method, for example, an exponential Golomb, a context-adaptive variable length coding (CAVLC), a context-adaptive binary arithmetic coding (CABAC), or the like. The entropy encoder 130 may perform encoding together or separately on information (e.g., a syntax element value or the like) required for video reconstruction in addition to the quantized transform coefficients. The entropy-encoded information may be transmitted or stored in unit of a network abstraction layer (NAL) in a bitstream form.

The dequantizer 125 dequantizes values (transform coefficients) quantized by the quantizer 123 and the inverse transformer 126 inversely transforms values dequantized by the dequantizer 125 to generate a residual sample.

The adder 140 adds a residual sample to a prediction sample to reconstruct a picture. The residual sample may be added to the prediction sample in units of a block to generate a reconstructed block. Although the adder 140 is described as a separate component, the adder 140 may be a part of the predictor 110. Meanwhile, the adder 140 may be referred to as a reconstructor or reconstructed block generator.

The filter 150 may apply deblocking filtering and/or a sample adaptive offset to the reconstructed picture. Artifacts at a block boundary in the reconstructed picture or distortion in quantization may be corrected through deblocking filtering and/or sample adaptive offset. Sample adaptive offset may be applied in units of a sample after deblocking filtering is completed. The filter 150 may apply an adaptive loop filter (ALF) to the reconstructed picture. The ALF may be applied to the reconstructed picture to which deblocking filtering and/or sample adaptive offset has been applied.

The memory 160 may store a reconstructed picture (decoded picture) or information necessary for encoding/decoding. Here, the reconstructed picture may be the reconstructed picture filtered by the filter 150. The stored reconstructed picture may be used as a reference picture for (inter) prediction of other pictures. For example, the memory 160 may store (reference) pictures used for inter-prediction. Here, pictures used for inter-prediction may be designated according to a reference picture set or a reference picture list.

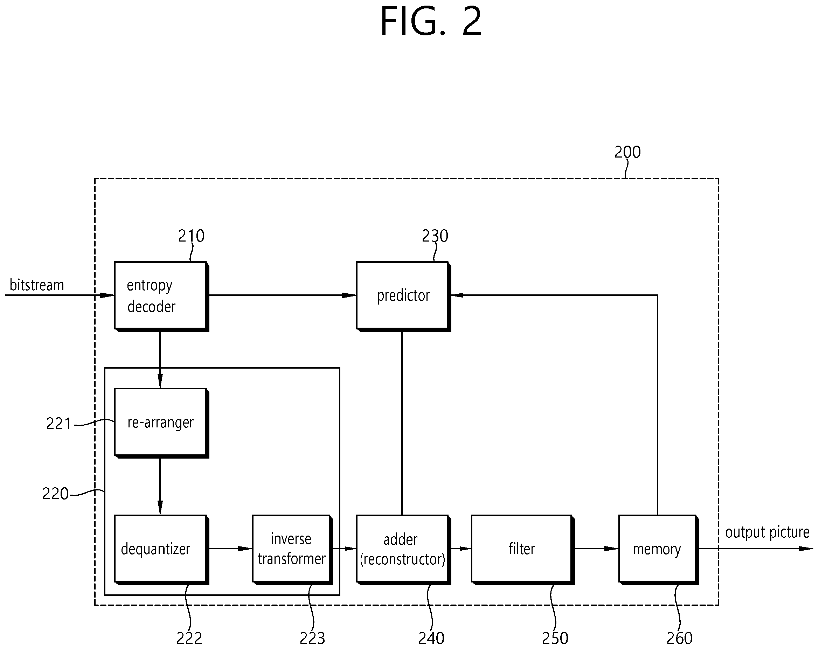

FIG. 2 briefly illustrates a structure of a video decoding device to which the present invention is applicable.

Referring to FIG. 2, a video decoding device 200 may include an entropy decoder 210, a residual processor 220, a predictor 230, an adder 240, a filter 250, and a memory 260. The residual processor 220 may include a re-arranger 221, a dequantizer 222, an inverse transformer 223.

When a bitstream including video information is input, the video decoding device 200 may reconstruct a video in association with a process by which video information is processed in the video encoding device.

For example, the video decoding device 200 may perform video decoding using a processing unit applied in the video encoding device. Thus, the processing unit block of video decoding may be, for example, a coding unit and, in another example, a coding unit, a prediction unit or a transform unit. The coding unit may be split from the largest coding unit according to the quad tree structure and/or the binary tree structure.

A prediction unit and a transform unit may be further used in some cases, and in this case, the prediction block is a block derived or partitioned from the coding unit and may be a unit of sample prediction. Here, the prediction unit may be divided into sub-blocks. The transform unit may be split from the coding unit according to the quad tree structure and may be a unit that derives a transform coefficient or a unit that derives a residual signal from the transform coefficient.

The entropy decoder 210 may parse the bitstream to output information required for video reconstruction or picture reconstruction. For example, the entropy decoder 210 may decode information in the bitstream based on a coding method such as exponential Golomb encoding, CAVLC, CABAC, or the like, and may output a value of a syntax element required for video reconstruction and a quantized value of a transform coefficient regarding a residual.

More specifically, a CABAC entropy decoding method may receive a bin corresponding to each syntax element in a bitstream, determine a context model using decoding target syntax element information and decoding information of neighboring and decoding target blocks or information of amabol/bin decoded in a previous step, predict bin generation probability according to the determined context model and perform arithmetic decoding of the bin to generate a symbol corresponding to each syntax element value. Here, the CABAC entropy decoding method may update the context model using information of a symbol/bin decoded for a context model of the next symbol/bin after determination of the context model.

Information about prediction among information decoded in the entropy decoder 210 may be provided to the predictor 250 and residual values, that is, quantized transform coefficients, on which entropy decoding has been performed by the entropy decoder 210 may be input to the re-arranger 221.

The re-arranger 221 may rearrange the quantized transform coefficients into a two-dimensional block form. The re-arranger 221 may perform rearrangement corresponding to coefficient scanning performed by the encoding device. Although the re-arranger 221 is described as a separate component, the re-arranger 221 may be a part of the dequantizer 222.

The dequantizer 222 may de-quantize the quantized transform coefficients based on a (de)quantization parameter to output a transform coefficient. In this case, information for deriving a quantization parameter may be signaled from the encoding device.

The inverse transformer 223 may inverse-transform the transform coefficients to derive residual samples.

The predictor 230 may perform prediction on a current block, and may generate a predicted block including prediction samples for the current block. A unit of prediction performed in the predictor 230 may be a coding block or may be a transform block or may be a prediction block.

The predictor 230 may determine whether to apply intra-prediction or inter-prediction based on information on a prediction. In this case, a unit for determining which one will be used between the intra-prediction and the inter-prediction may be different from a unit for generating a prediction sample. In addition, a unit for generating the prediction sample may also be different in the inter-prediction and the intra-prediction. For example, which one will be applied between the inter-prediction and the intra-prediction may be determined in unit of CU. Further, for example, in the inter-prediction, the prediction sample may be generated by determining the prediction mode in unit of PU, and in the intra-prediction, the prediction sample may be generated in unit of TU by determining the prediction mode in unit of PU.

In case of the intra-prediction, the predictor 230 may derive a prediction sample for a current block based on a neighboring reference sample in a current picture. The predictor 230 may derive the prediction sample for the current block by applying a directional mode or a non-directional mode based on the neighboring reference sample of the current block. In this case, a prediction mode to be applied to the current block may be determined by using an intra-prediction mode of a neighboring block.

In the case of inter-prediction, the predictor 230 may derive a prediction sample for a current block based on a sample specified in a reference picture according to a motion vector. The predictor 230 may derive the prediction sample for the current block using one of the skip mode, the merge mode and the MVP mode. Here, motion information required for inter-prediction of the current block provided by the video encoding device, for example, a motion vector and information about a reference picture index may be acquired or derived based on the information about prediction.

In the skip mode and the merge mode, motion information of a neighboring block may be used as motion information of the current block. Here, the neighboring block may include a spatial neighboring block and a temporal neighboring block.

The predictor 230 may construct a merge candidate list using motion information of available neighboring blocks and use information indicated by a merge index on the merge candidate list as a motion vector of the current block. The merge index may be signaled by the encoding device. Motion information may include a motion vector and a reference picture. When motion information of a temporal neighboring block is used in the skip mode and the merge mode, a highest picture in a reference picture list may be used as a reference picture.

In the case of the skip mode, a difference (residual) between a prediction sample and an original sample is not transmitted, distinguished from the merge mode.

In the case of the MVP mode, the motion vector of the current block may be derived using a motion vector of a neighboring block as a motion vector predictor. Here, the neighboring block may include a spatial neighboring block and a temporal neighboring block.

When the merge mode is applied, for example, a merge candidate list may be generated using a motion vector of a reconstructed spatial neighboring block and/or a motion vector corresponding to a Col block which is a temporal neighboring block. A motion vector of a candidate block selected from the merge candidate list is used as the motion vector of the current block in the merge mode. The aforementioned information about prediction may include a merge index indicating a candidate block having the best motion vector selected from candidate blocks included in the merge candidate list. Here, the predictor 230 may derive the motion vector of the current block using the merge index.

When the MVP (Motion vector Prediction) mode is applied as another example, a motion vector predictor candidate list may be generated using a motion vector of a reconstructed spatial neighboring block and/or a motion vector corresponding to a Col block which is a temporal neighboring block. That is, the motion vector of the reconstructed spatial neighboring block and/or the motion vector corresponding to the Col block which is the temporal neighboring block may be used as motion vector candidates. The aforementioned information about prediction may include a prediction motion vector index indicating the best motion vector selected from motion vector candidates included in the list. Here, the predictor 230 may select a prediction motion vector of the current block from the motion vector candidates included in the motion vector candidate list using the motion vector index. The predictor of the encoding device may obtain a motion vector difference (MVD) between the motion vector of the current block and a motion vector predictor, encode the MVD and output the encoded MVD in the form of a bitstream. That is, the MVD may be obtained by subtracting the motion vector predictor from the motion vector of the current block. Here, the predictor 230 may acquire a motion vector included in the information about prediction and derive the motion vector of the current block by adding the motion vector difference to the motion vector predictor. In addition, the predictor may obtain or derive a reference picture index indicating a reference picture from the aforementioned information about prediction.

The adder 240 may add a residual sample to a prediction sample to reconstruct a current block or a current picture. The adder 240 may reconstruct the current picture by adding the residual sample to the prediction sample in units of a block. When the skip mode is applied, a residual is not transmitted and thus the prediction sample may become a reconstructed sample. Although the adder 240 is described as a separate component, the adder 240 may be a part of the predictor 230. Meanwhile, the adder 240 may be referred to as a reconstructor or reconstructed block generator.

The filter 250 may apply deblocking filtering, sample adaptive offset and/or ALF to the reconstructed picture. Here, sample adaptive offset may be applied in units of a sample after deblocking filtering. The ALF may be applied after deblocking filtering and/or application of sample adaptive offset.

The memory 260 may store a reconstructed picture (decoded picture) or information necessary for decoding. Here, the reconstructed picture may be the reconstructed picture filtered by the filter 250. For example, the memory 260 may store pictures used for inter-prediction. Here, the pictures used for inter-prediction may be designated according to a reference picture set or a reference picture list. A reconstructed picture may be used as a reference picture for other pictures. The memory 260 may output reconstructed pictures in an output order.

When coding is performed on the input picture, the coding may be performed based on one processing unit. The processing unit may be represented as a coding unit (CU). Meanwhile, as coding is performed in units of areas including similar information in the picture, transform efficiency may be improved and accordingly overall coding efficiency may be improved. In addition, as coding is performed in units of areas including similar information in the picture, prediction accuracy may be improved and accordingly overall coding efficiency may be improved. However, when only the quad tree (QT) structure is applied and the picture is split into square CUs, there may be a limitation in splitting the picture such that the CUs include only accurately similar information. In this case, the picture may be split into non-square CUs including information representing the specific object to enhance coding efficiency.

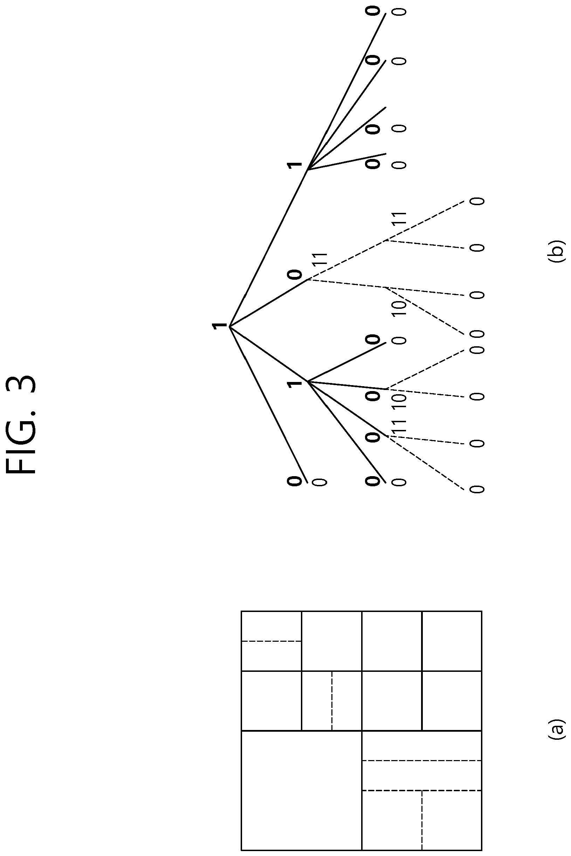

FIG. 3 illustrates a CU split through a quad tree binary tree (QTBT) structure and a signaling method of the QTBT structure.

The QTBT structure may represent a structure in which a CU (or CTU) is split through a QT structure and split through a binary tree (BT) structure. That is, the QTBT may represent a splitting structure configured by combining the QT structure and the BT structure. When a picture is coded in units of CTU, the CTU may be split through the QT structure. A leaf node of the QT structure may be further split through the BT structure. Here, the leaf node may represent a CU which is not split any further in the QT structure, and the leaf node may be called an end node. In addition, the QT structure may represent a structure in which a CU (or CTU) having a 2Nx2N size is split into four sub-CUs having a NxN size, and the BT structure may represent a structure in which a CU having a 2Nx2N size is split into two sub-CUs having a Nx2N (or nLx2N, nRx2N) size or two sub-CUs having a 2NxN (or 2NxnU, 2NxnD) size. Referring to FIG. 3(a), the CU may be split into square CUs of a deeper depth through the QT structure, and a specific CU among the square CUs may be split into non-square CUs of a deeper depth through the BT structure.

FIG. 3(b) illustrates an example of syntax signaling of the QTBT structure. The solid line illustrated in FIG. 3(b) may represent the QT structure and the dotted line may represent the BT structure. Also, from the top to the bottom, the syntax for CUs from a higher depth to a deeper depth may be represented. In addition, the syntax for the upper left side, the upper right side, the lower left side, and the lower right side CUs in the left-to-right direction may be represented. Specifically, the uppermost number may represent a syntax for a CU of n depth, the numbers at the second position from above may represent a syntax for CUs of n+1 depth, the numbers at the third position from above may represent a syntax for CUs of n+2 depth, and the numbers at the fourth position from above may represent a syntax for CUs of n+3 depth. Also, the numbers in the bold may represent values of syntaxes for the QT structure, and numbers not represented in the bold may represent values of syntaxes for the BT structure.

Referring to FIG. 3(b), a QT split flag indicating whether a CU is split through the QT structure may be transmitted. That is, a flag indicating whether a CU having a 2Nx2N size is split into 4 sub-CUs having an NxN size may be transmitted. For example, if the value of the QT split flag for the CU is 1, the CU may be split into 4 sub CUs, and if the value of the QT split flag for the CU is 0, the CU may not be split. In addition, information on a maximum CU size, a minimum CU size, and a maximum depth in the QT structure may be transmitted to adjust the QT structure for the input image. The information on the QT structure described above may be transmitted for each of the slice types or may be transmitted for each of image components (luminance component, saturation component, etc.). Meanwhile, the information about the BT structure may be transmitted to the end node which is not split any further in the QT structure. That is, information on the BT structure for the CU corresponding to the end node in the QT structure may be transmitted. Here, information including the information on the BT structure may be referred to as additional splitting information. For example, a BT split flag indicating whether the CU is split through the BT structure, i.e., whether the BT structure for the CU is applied, may be transmitted. Specifically, when the value of the BT split flag is 1, the CU may be split into two sub-CUs, and when the value of the BT split flag is 0, the CU may not be split. In addition, information on the maximum CU size, the minimum CU size, the maximum depth in the BT structure, and the like, may be transmitted to adjust the BT structure for the input image. The information about the BT structure described above may be transmitted for each of the slice types or may be transmitted for each of the image components. When the CU is split through the BT structure, the CU may be split in a horizontal or vertical direction. A BT split mode index indicating a direction in which the CU is split, i.e., a split type of the CU, may be further transmitted.

Meanwhile, when inter-prediction is performed as described above, a predicted block including prediction samples for a current block may be generated. Here, the predicted block includes prediction samples in a spatial domain (or pixel domain). The predicted block is derived similarly in the encoding device and the decoding device, and the encoding device may signal information (residual information) regarding a residual between the original block and the predicted block, rather than the original sample value of the original block, thus enhancing image coding efficiency. The decoding device may derive a residual block including residual samples based on the residual information and add the residual block and the predicted block to generate a reconstructed block including reconstructed samples and generate a reconstructed picture including the reconstructed block.

Meanwhile, when a light source or a shadow exists in an image, a local illumination change occurs in an affected area. In this case, in predicting an object in a block, prediction performance is reduced due to a difference in illumination between the current block of the current picture and the reference block of the reference picture. This is because such a local illumination change cannot be compensated according to a general motion estimation/compensation algorithm used in a video encoding/decoding process. Meanwhile, when such a local illumination change is compensated, prediction may be performed more accurately.

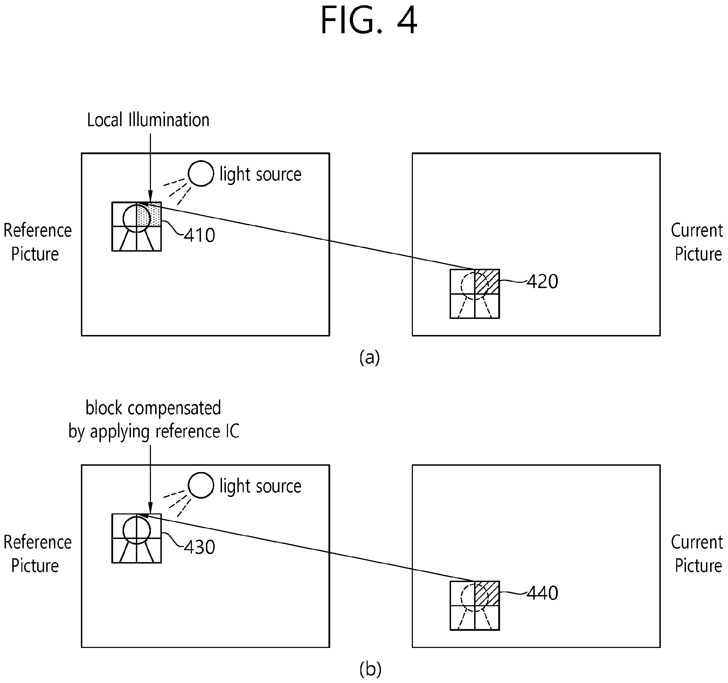

FIG. 4 illustrates examples of prediction with or without illumination compensation (IC).

In FIG. 4(a), a block 410 of a corresponding reference picture may have locally high illumination due to a light source as compared with a current block 420 of the current picture as a target of (inter-)prediction. This may be caused due to a temporal difference between the current picture and the reference picture, a difference between positions of the objects of the current picture and positions of the objects of the reference picture and/or a difference in position between the reference block and the current block. In this case, the encoder may use the block 410 as a reference block for inter-prediction based on a rate-distortion (RD) cost or may use another nearby block as the reference block. In this case, however, prediction efficiency is lowered and a lot of data must be allocated to a residual signal.

Meanwhile, as illustrated in FIG. 4(b), efficiency of prediction may be increased by predicting a current block 440 based on a reference block 430 compensated by applying illumination compensation according to the present invention. In this case, the residual between the current block and the original block is reduced so that data allocated to the residual signal may be reduced and coding efficiency may be improved. The method of enhancing efficiency of prediction by compensating for illumination of the reference block may be termed local illumination compensation (LIC). The LIC may be mixedly used with illumination compensation (IC).

As additional information for IC, an IC flag for indicating whether IC is applied or IC parameters for applying IC may be used. The IC parameters may include a scaling factor a and an offset b as described hereinafter. In order to increase efficiency of IC, it is important to improve prediction performance, while minimizing the additional information for IC. For example, like limited application to a CU having a specific size or a PU having a partition type of 2Nx2N to minimize additional information, whether to apply IC may be determined in consideration of a block size or a partition type. Also, when the QTBT structure is used as described above, CUs having various sizes may be used without distinguishing between CU, PU, and TU, and thus, accuracy of prediction may be improved by applying IC suitable for a corresponding structure.

IC is based on a linear model and may be, for example, based on Equation 1 below.

[Equation 1]

$$\sum y = a * \sum x + b$$

Here, IC parameters a and b represent a scaling factor and an offset, respectively, and x and y respectively represent a neighboring reference sample value of the reference block and a neighboring reference sample value of the current block used to derive the IC parameters, respectively. Alternatively, x and y may represent a reference sample value in the reference block and a sample value of the original block in the original picture corresponding to the current block used to derive the IC parameters, respectively. The reference block may be indicated based on a motion vector of the current block. In the IC parameter deriving process, a difference between the two sides of Equation 1 may be regarded as an error (E), and the IC parameters a and b satisfying a condition for minimizing the error may be obtained and applied to the reference block. That is, after the IC parameters are derived, reference samples (illumination-compensated) corrected by applying a scaling factor and an offset in units of samples to the reference samples of the reference block may be derived.

Since the IC parameters a and b to be obtained in Equation 1 are values that minimize errors of both sides, Equation 2 for obtaining the IC parameters may be expressed as follows

[Equation 2]

$$E(a, b) = \sum_i (y_i - ax_i - b)^2 + \lambda(a - 1)^2$$

Here, E(a, b) represents values a and b minimizing the errors, where i represents indexing of each sample and $\lambda$ (lambda) represents a control parameter. The $\lambda$ (lambda) may be previously determined or may be derived, for example, based on x. For example, it may be derived as $\lambda = (\sum_i x_i x_i \gg 7)$, and in another example, $\lambda$ may be set to 0 and the rear stage of Equation (2) may be omitted. This is the same in the following equations.

Above Equation 2 may be summarized as follows

[Equation 3]

$$\begin{pmatrix} \sum_i x_i x_i + \lambda & \sum_i x_i \\ \sum_i x_i & \sum_i 1 \end{pmatrix} \begin{pmatrix} a \\ b \end{pmatrix} = \begin{pmatrix} \sum_i x_i y_i + \lambda \\ \sum_i y_i \end{pmatrix}$$

Based on Equation 3, the IC parameters a and b may be derived as follows.

[Equation 4]

$$a = \frac{N \sum_i x_i y_i - \sum_i x_i \sum_i y_i + \lambda}{N \sum_i x_i x_i - \sum_i x_i \sum_i x_i + \lambda}$$

[Equation 5]

$$b = \sum_i y_i - a * \sum_i x_i$$

In Equation 4, N represents a normalization parameter. Here N may be derived from the portion $\sum_i 1$ of Equation 3 above. For example, N may be determined based on the size of the current block (or reference block), and may be, for example, a value such as width*width or width + width of the corresponding block. Alternatively, N may be a value such as the width or width + n of the corresponding block.

In order to derive the IC parameters, 1) the reference sample in the reference block and the sample of the original block in the original picture corresponding to the current block may be used as described above, or 2) a neighboring reference sample of the reference block and a neighboring reference sample of the current block may be used.

When the IC parameters are obtained based on the reference sample in the reference block and the sample of the original block in the original picture corresponding to the current block as in 1) described above, relatively accurate parameters may be obtained. However, since the original picture may not be obtained at the decoder end, the IC parameters may be obtained at the encoder end and signaled to the decoder end, which increases the amount of data of additional information.

Meanwhile, when the IC parameters are obtained based on the neighboring reference samples of the reference block and the neighboring reference sample of the current block as in 2) described above, since IC parameters obtained using the relation of neighboring samples are used, accuracy of the IC parameters may be relatively lower as compared with the case of 1), but in the aspect of the decoder, the corresponding parameters may be directly obtained, without having to explicitly receive the IC parameters (i.e., a and b) from the encoder, and thus, it is advantageous in terms of coding efficiency.

According to the present invention, when the IC parameters are obtained based on the neighboring reference sample of the reference block and the neighboring reference sample of the current block, the following neighboring samples may be specifically used.

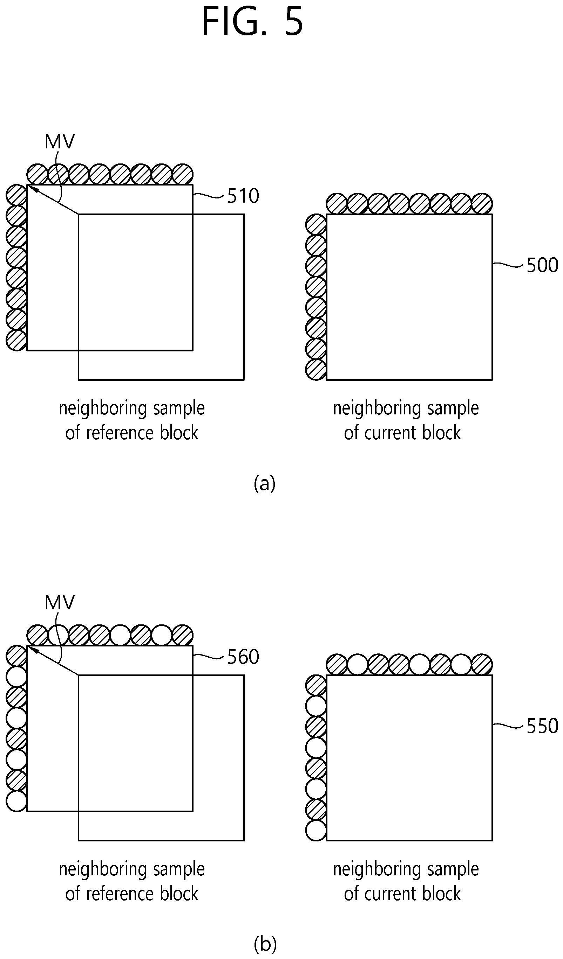

FIG. 5 is examples of neighboring reference samples used for deriving IC parameters.

FIG. 5(a) illustrates a case where left/upper neighboring samples of a current block 500 and left/upper neighboring samples of a reference block 510 are used as neighboring reference samples in units of one sample (one step). When a top-left sample position of the current block 500 is (0,0), the positions of the left neighboring samples may include (-1,0),..., (-1, H-1) and positions of the upper neighboring samples may include (0, -1),..., (W-1, -1). Here, H and W may represent a height and a width of the current block. In (a), neighboring samples adjacent to the left/upper boundary of the current block 500 and neighboring samples adjacent to the left/upper boundary of the reference block 510 may all be used as neighboring reference samples.

FIG. 5(b) illustrates a case where left/upper neighboring samples of a current block 550 and left/upper neighboring samples of a reference block 560 are used as neighboring reference samples in units of two samples (2 step). In FIG. 5(b), the neighboring samples adjacent to the left/upper boundary of the current block 550 and the neighboring samples adjacent to the left/upper boundary of the reference block 560 may be sub-sampled in units of two samples and may be used as neighboring reference samples.

For example, classification of (a) and (b) may be determined based on the size (or width/height) of the current blocks. For example, if the size of the corresponding block is smaller than or equal to 8x8, the neighboring samples may be used in units of one sample, and if the size of the corresponding block is greater than 8x8, the neighboring samples may be used in units of two samples. Thus, complexity may be reduced, while IC performance is maintained, by adaptively determining the step of the neighboring samples used for deriving the IC parameters based on the block size (or width/height). Although (b) is described based on the two steps, this is merely an example and steps having a value greater than 2 may also be applied. Alternatively, a step size applied to the left neighboring samples and a step size applied to the upper neighboring samples may be different. The step size may be represented by a sub-sampling factor.

Meanwhile, when the QTBT structure is applied, non-square blocks in various ratios may be used for coding a current picture. For example, blocks having the sizes illustrated in the following table may be used.

[Table 1]

| 4x4, 4x8, 4x16, 4x32, |
| 8x4, 8x8, 8x16, 8x32, 8x64, |
| 16x4, 16x8, 16x16, 16x32, 16x64, 16x128, |
| 32x4, 32x8, 32x16, 32x32, 32x64, 32x128, |
| 64x8, 64x16, 64x32, 64x64, 64x128, |
| 128x16, 128x32, 128x64, 128x128 |

The types of the blocks may vary depending on a minimum size (min), a maximum size (max), and a depth of the QuadTree, and a minimum size (min), a maximum size (max), and a depth of the BinaryTree.

Considering the non-square blocks, the following neighboring reference samples may be used, for example, to derive IC parameters more efficiently.

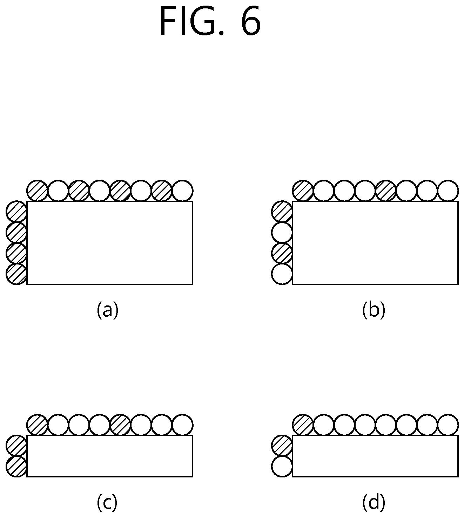

FIG. 6 illustrates examples of neighboring reference samples used for deriving IC parameters.

Referring to FIG. 6, if the width and height of the current block are different, the step sizes of the left side and upper side may be set to be different. In this case, the step sizes maybe set further based on the width and/or height. In this case, for example, the number of left neighboring reference samples used for deriving IC parameters and the number of upper neighboring reference samples may be derived to be equal.

For example, if the width and height of the block are different, a reference step may be determined as 2 steps if min (width, height)> 8, and determined as 1 step in otherwise case. If the width is greater than the height, the reference step may be adjusted in the ratio of (width/height) and adjusted in the ratio of (height/width) in otherwise case. For example, if the width is greater than the height, the reference step may be increased in the ratio of (width/height) with respect to an upper step, and if the width is smaller than the height, the reference step may be increased in the ratio of (height/width) with respect to the left step. Specifically, for example, when the reference step is 1 step and the width of the block is 8 and the height thereof is 4 as illustrated in (a), the reference step is applied to the left step and 2 steps obtained by increasing the reference step in the ratio of (8/4) may be applied to the upper step. Also, for example, if the reference step is 2 steps and the width of the block is 8 and the height thereof is 4 as illustrated in (b), the reference step may be applied to the left step and 4 steps obtained by increasing the reference step in the ratio of (8/4) may be applied to the upper step. Also, for example, if the reference step is 1 step and the width of the block is 8 and the height thereof is 2 as illustrated in(c), the reference step may be applied to the left step and 4 steps obtained by increasing the reference step in the ratio of (8/2) may be applied to the upper step. Also, for example, if the reference step is 2 steps and the width of the block is 8 and the height thereof is 2 as illustrated in (d), the reference step may be applied to the left step and 8 steps obtained by increasing the reference step in the ratio of (8/2) may be applied to the upper step.

Specifically, for example, the left/upper step sizes considering the size, width, and height of the non-square block may be derived as follows.

[Table 2]

|  | width | | height | |
| --- | --- | --- | --- | --- |
|  | stepX | num. of sample | stepY | num. of sample |
| 8x16 | 1 | 8 | 2 | 8 |
| 16x32 | 2 | 8 | 4 | 8 |
| 16x64 | 2 | 8 | 8 | 8 |

Referring to Table 2, in the case of a $8\times16$ block, a step for the width (i.e., upper step; step X) is 1 and a step for the height (i.e., left step; step Y) is 2, so IC parameters may be derived using a total of 16 samples. Here, step Y may be calculated as step X*16/8. In the case of a 16x32 block, the step X is 2 and the step Y is 4 (step X*32/16), so IC parameters may be derived using a total of 16 samples. In the case of a 16x62 block, the step X is 2 and the step Y is 8 (step X*64/8) so IC parameters may be derived using a total of 16 samples. According to the above-described method, even when the current block is a non-square block, neighboring samples for efficiently deriving IC parameters may be derived.

Meanwhile, in this case, since the parameters are calculated using only a small number of reference samples regarding a specific side (left side or right side) according to block sizes, accuracy of the IC parameters may be lowered, which may be improved through the following method.

As illustrated in the merge mode and the MVP mode described above, a motion vector of a neighboring block may be used for deriving a motion vector of the current block, and as the neighboring block, blocks positioned on the lower left side, upper right side, and upper left side of the current block, as well as the blocks positioned on the left side and the upper side of the current block, may be considered. This means that the lower left, upper right, and upper left blocks, as well as the left and upper blocks of the current block, may have a high correlation with the current block. That is, the lower left, upper right, and upper left neighboring samples, as well as the neighboring samples adjacent to the left side and upper side, may also reflect a change in illumination with respect to the current block. Thus, when the QTBP structure is applied, accuracy of the IC parameters may be increased using the lower left, upper right and/or upper left neighboring samples positioned on the extended line, as well as the left neighboring samples and the upper neighboring samples adjacent to the current block.

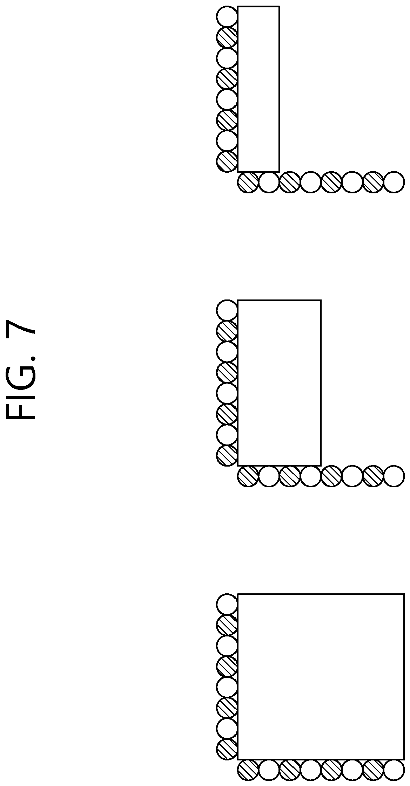

FIG. 7 illustrates examples of neighboring reference samples for deriving IC parameters used for non-square blocks.

Referring to FIG. 7, when the width and height of a block are different, the lower left neighboring samples or right neighboring samples placed in an extended line by a max (width, height) length, as well as left neighboring samples and upper neighboring samples adjacent to the block, may be further used as neighboring reference samples. In this case, the neighboring reference samples may be extended to a square size having a value of max (width, height).

Even in this case, sub-sampled samples may be used according to the above-described step sizes. For example, in FIG. 7, a case where step X and step Y are 2 is illustrated. Here, the step sizes may be set to be various according to sizes, widths, and/or heights of blocks such as 1, 2, 4, and 8 and may be set to be different for the step X and the step Y as described above.

In FIG. 7, an example in which neighboring reference samples are extended and used for shorter sides among widths and heights is illustrated, but the left and upper neighboring samples may be extended to the lower left and upper right neighboring reference samples so as to be used.

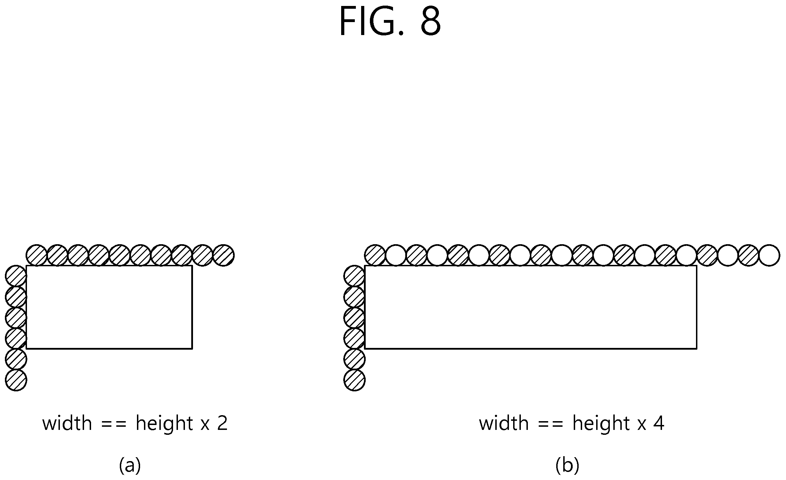

FIG. 8 illustrates examples of neighboring reference samples including upper right and lower left neighboring reference samples for deriving IC parameters used for non-square blocks.

Referring to FIG. 8, an example of a method of extending both width and height of a block when the width and height are different to further use (lower left/upper right) neighboring reference samples placed on the extended line is illustrated. In this case, the number of samples extended and used may be set in various ways, and may be determined, for example, based on the ratio of width and height or min (width, height).

For example, in FIG. 8(a), the width of a block is 8 and the height thereof is 4, and thus, the ratio of the width to the height is 2. In this case, extension may be made by 2 as a half of the min (width, height). That is, two lower left neighboring reference samples and two upper right neighboring reference samples may be further used to derive IC parameters. Also, for example, when the ratio of the width and height of a block is 4 or 8, the step may be adjusted such that the ratio of the left neighboring reference samples and the upper neighboring reference samples for IC parameter derivation is 2 and the width and the height may then be extended as illustrated in FIG. 8(b). When the width and height are extended by 2, two lower left neighboring reference samples and two upper right neighboring reference samples may be further used for IC parameter derivation. In FIG. 8, the numbers of extended neighboring reference samples at the left and upper ends are the same, but this is an example, and the numbers of the extended samples at the left and upper ends may vary depending on the shape of the block.

Meanwhile, when a small number of left or upper reference samples are used for IC parameter derivation for a non-square block, it may act as an error component to lower accuracy of the IC parameters. Thus, instead of using the left and upper neighboring reference samples of the block, only the left or upper neighboring reference samples may be used depending on the shape of the block.

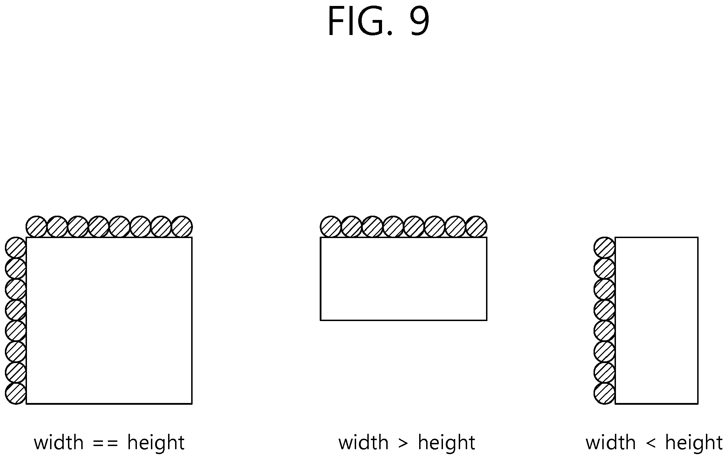

FIG. 9 illustrates examples of neighboring samples for deriving IC parameters.

Referring to FIG. 9, for a square block, IC parameters may be derived using the left and upper neighboring reference samples, in the case of a block having a width greater than height, IC parameters may be derived using upper neighboring reference samples, and in the case of a block having a height greater than a width, IC parameters may be derived using left neighboring reference samples. In this manner, when the association with the left or upper side of the block is high, IC parameters may be derived without considering samples of a less relevant side. This method may be limitedly applied depending on the size and shape of the block and may be performed by adjusting the number of left and/or upper steps.

Meanwhile, whether IC is applied to the current block may be determined based on an IC flag. The IC flag may be sent for an IC enabled block (or IC available block), and in this case, IC availability may be determined according to the size of the block and/or the width, height size or ratio of the block. For example, if a block size is less than 16×16, IC may not be available. Alternatively, IC may not be available if a shape of a block is not square. Alternatively, IC may be available only when the block has shapes of 2N×2N, 2N×N, N×2N, 2N×N/2, N/2×2N and may not be available in otherwise case. Alternatively, the IC flag may be transmitted limitedly according to a block size and a block shape. Here, the current block may correspond to a CU according to the QTBT structure, N is used to represent a width to height ratio and does not indicate a partition type (mode) of a PU used when the QTBT structure is not applied. Also, it is possible to determine whether to apply IC only to a block of a leaf node of QuadTree of the QTBT (i.e., IC flag transmission), or IC may be applied only when the corresponding block is a square block.

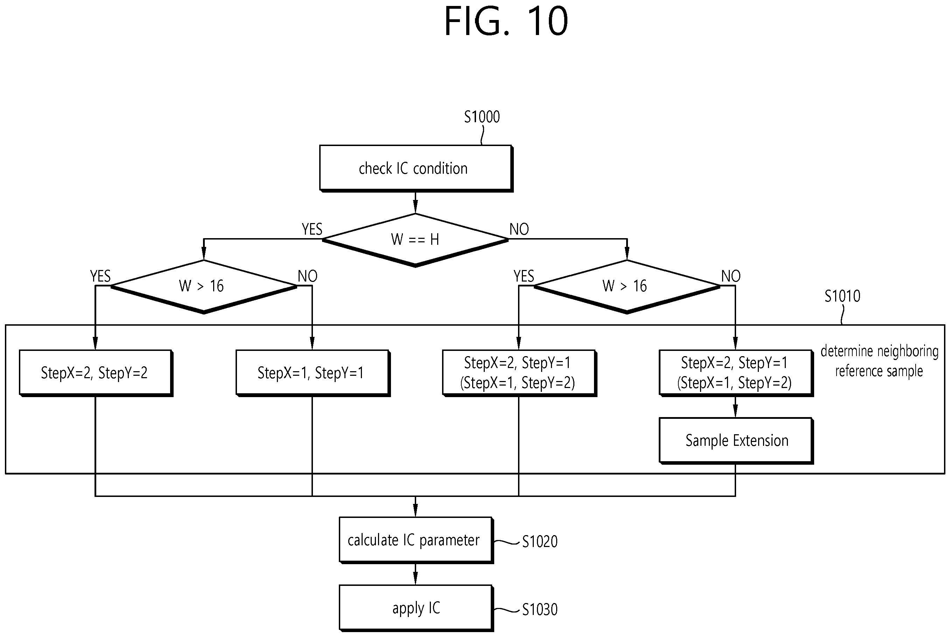

FIG. 10 illustrates IC application based on various criteria according to the present invention. The operation illustrated in FIG. 10 may be performed by a coding device, and the coding device may include an encoding device and a decoding device.

Referring to FIG. 10, the coding device checks an IC condition (S1000). The coding device may adaptively derive reference neighboring samples in consideration of the various conditions described above in the present invention (S1010) and calculate IC parameters based on the derived reference neighboring samples (S1020).

i) For example, if the width (W) and the height (H) of the current block are equal, the coding device may determine a step size according to the block size. That is, when W (= H) is larger than 16, the coding device may set step X and step Y, which are step sizes of width and height, to 2, respectively, and ii) when W(=H) is smaller than 16, the coding device may set step X and step Y to 1, respectively, to derive neighboring reference samples.

Meanwhile, iii) if the width and the height are different and if the ratio of the width and the height is 2 (e.g., 8×4, 16×8, 32×16, etc.), the coding device may set step X and step Y to 1 such that the numbers of reference samples in the width direction and in the height direction are equal, or if the ratio of the height and the width is 2 (e.g., 4×8, 8×16, 16×32, etc.), the coding device may set step X and step Y to 2 such that the numbers of reference samples in the width direction and in the height direction are equal. iv) If the ratio of the width and the height is 4 (e.g., 16×4, 32×8, etc.), the coding device may set step X to 2 and step Y to 1, or if the ratio of the width and the height is 4 (e.g., 4×16, 8×32, etc.), the coding device may set step X to 1 and step Y to 2. In this case, the neighboring reference samples may be extended to include the lower left neighboring reference samples and the upper right neighboring reference samples as described above in FIG. 8.

The coding device applies IC using the calculated IC parameters (S 1030). The coding device may derive a predicted block including illumination-compensated prediction samples by applying IC based on the calculated IC parameters.

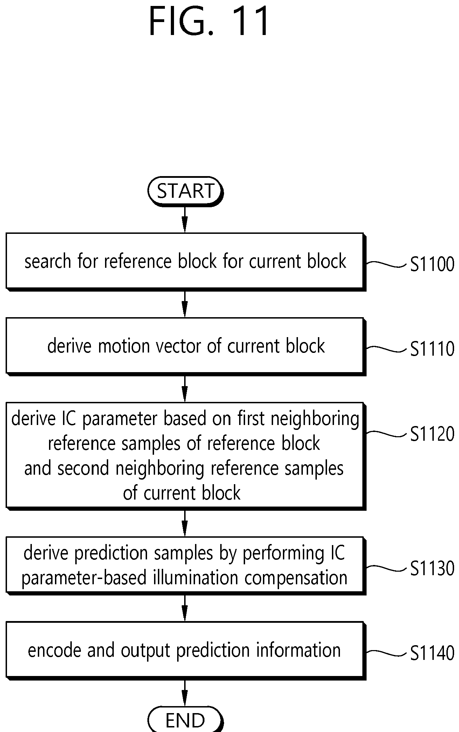

FIG. 11 schematically illustrates an example of an inter-prediction method in image encoding according to the present invention. The method disclosed in FIG. 11 may be performed by the encoding device disclosed in FIG. 1. Specifically, for example, steps S1110 to S1130 of FIG. 11 may be performed by the predictor of the encoding device and S 1140 may be performed by the entropy encoder of the encoding device.

Referring to FIG. 11, the encoding device detects a reference block for a current block (S1100). The encoding device may search for a reference block having an optimal rate-distortion (RD) cost on a reference picture through a motion estimation procedure.

The encoding device derives a motion vector of the current block (S1110). The encoding device may derive the motion vector indicating the reference block based on a position of the current block and a position of the reference block. The motion vector may be signaled to the decoding device according to a procedure defined according to an inter-prediction mode (e.g., merge mode, MVP mode) of the current block.

The encoding device derives first neighboring reference samples of the reference block and second neighboring reference samples of the current block, and derives IC parameters using the first neighboring reference samples and the second neighboring reference samples (S1120). The IC parameters may include the above-described scaling factor a and offset b. The IC parameters may be calculated based on Equations 1 to 5 described above. The first neighboring reference samples of the reference block and second neighboring reference samples may include the samples described above with reference to FIGS. 5 to 9.

For example, the first neighboring reference samples may include first left neighboring reference samples adjacent to a left boundary of the reference block and first upper neighboring reference samples adjacent to an upper boundary of the reference block, the second neighboring reference samples may include second left neighboring reference samples adjacent to a left boundary of the current block and second upper neighboring reference samples adjacent to an upper boundary of the current block. In this case, the first left neighboring reference samples or the first upper neighboring reference samples are samples sub-sampled by a step size of 2 or greater and the second left neighboring reference samples or the second upper neighboring reference samples are samples sub-sampled by a step size 2 or greater. Also, the current block may be a non-square block, a first step size for the first left neighboring reference samples may be different from a second step size for the first upper neighboring reference samples, the first step size may be the same as a step size for the second left neighboring reference samples, and the second step size may be the same as a step size for the second upper neighboring reference samples. In this case, the number of the first left neighboring reference samples and the number of the first upper neighboring reference samples may be equal, and the number of the second left neighboring reference samples and the number of the second upper neighboring reference samples may be equal. Here, the ratio of the first step size and the second step size may be determined based on the ratio of a height and a width of the current block.

In another example, the first neighboring reference samples may include first lower left neighboring reference samples of the reference block or first upper right reference samples of the reference block, and the second neighboring reference samples may include second lower left neighboring reference samples of the current block or second upper right neighboring reference samples of the current block. For example, if the width of the current block is greater than the height thereof, the first neighboring reference samples may include the first lower left neighboring reference samples and the second neighboring reference samples may include the second lower left neighboring reference samples. In this case, the sum of the number of the first left neighboring reference samples and the number of the first lower left neighboring reference samples may be equal to the number of the first upper neighboring reference samples, and the sum of the number of the second left neighboring reference samples and the number of the second lower left neighboring reference samples may be equal to the number of the second upper neighboring reference samples. Also, for example, if the width of the current block is smaller than the height thereof, the first neighboring reference samples may include the first upper right neighboring reference samples and the second neighboring reference samples may include the second upper right neighboring reference samples. In this case, the sum of the number of first upper neighboring reference samples and the number of first upper right reference samples is equal to the number of first left neighboring reference samples, and the sum of the number of second upper neighboring reference samples and the number of the second upper right neighboring reference samples may be equal to the number of second left neighboring reference samples.

In another example, the first neighboring reference samples may include first lower left neighboring reference samples of the reference block and first upper right neighboring reference samples of the reference block, and the second neighboring reference samples may include second lower left neighboring reference samples of the current block and second upper right neighboring reference samples of the current block. In this case, the number of the first lower left neighboring reference samples and the number of the first upper right neighboring reference samples are equal as a specific number, and the specific number may be determined based on the width and height of the current block. The specific number may be determined, for example, as a half of a minimum value of the width and height of the current block.

In another example, if the current block is a non-square block and the width of the current block is greater than the height thereof, the first neighboring reference samples may include only the first left neighboring reference samples adjacent to the left boundary of the reference block. Also, if the current block is a non-square block and the width of the current block is smaller than the height thereof, the first neighboring reference samples may include only the first upper neighboring reference samples adjacent to the upper boundary of the reference block.

The encoding device performs illumination compensation (IC) based on the calculated IC parameters to derive (illumination-compensated) prediction samples for the current block (S1130). The encoding device may apply the scaling factor a and the offset b to the reference samples of the reference block to derive corrected reference samples and obtain the prediction samples based on the corrected reference samples.

The encoding device encodes and outputs prediction information (S 1140). The prediction information may include information on the motion vector of the current block. For example, the information on the motion vector may include a merge index for the current block, and the like. In another example, the information on the motion vector may include an MVP flag and motion vector difference (MVD) information. In addition, the prediction information may include inter-prediction mode information of the current block. Further, the prediction information may include an IC flag. The IC flag may be signaled only when illumination compensation (IC) is available for the current block. For example, if the current block is a block split based on the QTBT structure, whether the IC is available may be determined based on the size, width, and/or height of the current block. For example, the IC may be determined to be available when the size of the current block is larger than a specific size or when the ratio of the width and height of the current block is smaller than 2 or 4.

The encoding device may encode the prediction information and output it as a bitstream. The bitstream may be transmitted to the decoding device via a network or a storage medium.

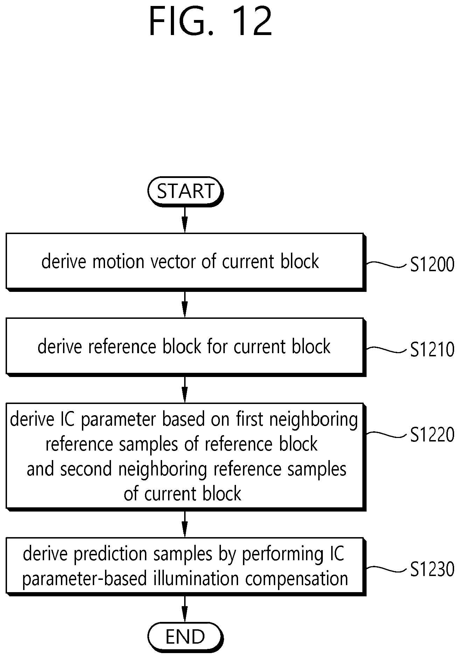

FIG. 12 schematically illustrates an example of an inter-prediction method in image decoding according to the present invention. The method disclosed in FIG. 12 may be performed by the decoding device disclosed in FIG. 2. Specifically, for example, steps S1200 to S1230 of FIG. 12 may be performed by the predictor of the decoding device.

Referring to FIG. 12, the decoding device derives a motion vector of the current block (S1200). The decoding device may derive the motion vector for the current block based on the prediction information acquired through the bitstream. The bitstream may be received from an encoding device via a network or storage medium. For example, the decoding device may generate a merge candidate list based on neighboring blocks of the current block and derive a motion vector of a merge candidate selected from the merge candidate list using the merge index included in the prediction information, as the motion vector of the current block. In another example, the decoding device may generate an MVP candidate list based on neighboring blocks of the current block, select a specific MVP candidate based on an MVP flag included in the inter-prediction information, and derive the motion vector using the motion vector of the selected MVP candidate and MVD derived from the MVD information included in the prediction information.

The decoding device derives a reference block for the current block (S1210). The decoding device may derive the reference block based on the motion vector. The decoding device may derive the reference block indicated by the motion vector based on a position of the current block on a reference picture.

The decoding device derives first neighboring reference samples of the reference block and second neighboring reference samples of the current block, and derives IC parameters using the first neighboring reference samples and the second neighboring reference samples (S1220). The IC parameters may include the above-described scaling factor a and offset b. The IC parameters may be calculated based on Equations 1 to 5 described above. The first and second neighboring reference samples may include the samples described above with reference to FIGS. 5 to 9.

For example, the first neighboring reference samples may include first left neighboring reference samples adjacent to a left boundary of the reference block and first upper neighboring reference samples adjacent to an upper boundary of the reference block, the second neighboring reference samples may include second left neighboring reference samples adjacent to a left boundary of the current block and second upper neighboring reference samples adjacent to an upper boundary of the current block. In this case, the first left neighboring reference samples or the first upper neighboring reference samples are samples sub-sampled by a step size of 2 or greater and the second left neighboring reference samples or the second upper neighboring reference samples are samples sub-sampled by a step size 2 or greater. Also, the current block may be a non-square block, a first step size for the first left neighboring reference samples may be different from a second step size for the first upper neighboring reference samples, the first step size may be the same as a step size for the second left neighboring reference samples, and the second step size may be the same as a step size for the second upper neighboring reference samples. In this case, the number of the first left neighboring reference samples and the number of the first upper neighboring reference samples may be equal, and the number of the second left neighboring reference samples and the number of the second upper neighboring reference samples may be equal. Here, the ratio of the first step size and the second step size may be determined based on the ratio of a height and a width of the current block.

In another example, the first neighboring reference samples may include first lower left neighboring reference samples of the reference block or first upper right reference samples of the reference block, and the second neighboring reference samples may include second lower left neighboring reference samples of the current block or second upper right neighboring reference samples of the current block. For example, if the width of the current block is greater than the height thereof, the first neighboring reference samples may include the first lower left neighboring reference samples and the second neighboring reference samples may include the second lower left neighboring reference samples. In this case, the sum of the number of the first left neighboring reference samples and the number of the first lower left neighboring reference samples may be equal to the number of the first upper neighboring reference samples, and the sum of the number of the second left neighboring reference samples and the number of the second lower left neighboring reference samples may be equal to the number of the second upper neighboring reference samples. Also, for example, if the width of the current block is smaller than the height thereof, the first neighboring reference samples may include the first upper right neighboring reference samples and the second neighboring reference samples may include the second upper right neighboring reference samples. In this case, the sum of the number of first upper neighboring reference samples and the number of first upper right reference samples is equal to the number of first left neighboring reference samples, and the sum of the number of second upper neighboring reference samples and the number of the second upper right neighboring reference samples may be equal to the number of second left neighboring reference samples.

In another example, the first neighboring reference samples may include first lower left neighboring reference samples of the reference block and first upper right neighboring reference samples of the reference block, and the second neighboring reference samples may include second lower left neighboring reference samples of the current block and second upper right neighboring reference samples of the current block. In this case, the number of the first lower left neighboring reference samples and the number of the first upper right neighboring reference samples are equal as a specific number, and the specific number may be determined based on the width and height of the current block. The specific number may be determined, for example, as a half of a minimum value of the width and height of the current block.

In another example, if the current block is a non-square block and the width of the current block is greater than the height thereof, the first neighboring reference samples may include only the first left neighboring reference samples adjacent to the left boundary of the reference block. Also, if the current block is a non-square block and the width of the current block is smaller than the height thereof, the first neighboring reference samples may include only the first upper neighboring reference samples adjacent to the upper boundary of the reference block.

The decoding device performs illumination compensation (IC) based on the calculated IC parameters to derive (illumination-compensated) prediction samples for the current block (S1230). The encoding device may apply the scaling factor a and the offset b to the reference samples of the reference block to derive corrected reference samples and obtain the prediction samples based on the corrected reference samples.

Meanwhile, the prediction information may include an IC flag. The decoding device may determine whether the IC is applied to the current block based on the IC flag. The IC flag may be signaled only when the IC is available for the current block. For example, if the current block is a block split based on the QTBT structure, whether the IC is available may be determined based on the size, width, and/or height of the current block. For example, the IC may be determined to be available when the size of the current block is larger than a specific size or when the ratio of the width and height of the current block is smaller than 2 or 4.

Meanwhile, although not shown, the decoding device may receive residual information on residual samples of the current block from the bitstream. The residual information may include transform coefficients relating to the residual samples.

The decoding device may derive the residual samples (or residual sample array) for the current block based on the residual information. The decoding device may generate reconstructed samples based on the prediction samples and the residual samples and may derive a reconstructed block or a reconstructed picture based on the reconstructed samples. Thereafter, the decoding device may apply an in-loop filtering procedure such as deblocking filtering and/or SAO procedure to the reconstructed picture in order to improve subjective/objective image quality as necessary, as described above.

The method according to the present invention described above may be implemented in software. The encoding device and/or decoding device according to the present invention may be included in a device that performs image processing, for example, for a TV, a computer, a smart phone, a set-top box, or a display device.

When the embodiments of the present invention are implemented in software, the above-described method may be implemented by modules (processes, functions, and so on) that perform the functions described above. Such modules may be stored in memory and executed by a processor. The memory may be internal or external to the processor, and the memory may be coupled to the processor using various well known means. The processor may comprise an application-specific integrated circuit (ASIC), other chipsets, a logic circuit and/or a data processing device. The memory may include a ROM (read-only memory), a RAM (random access memory), a flash memory, a memory card, a storage medium, and/or other storage device.

**Claims**

1. An inter-prediction method performed by a decoding apparatus, the method comprising:

   deriving a motion vector of a current block;
   deriving a reference block for the current block based on the motion vector;
   deriving an illumination compensation (IC) parameter based on first neighboring reference samples of the reference block and second neighboring reference samples of the current block, wherein the IC parameter includes scaling factor a and offset b; and
   deriving prediction samples for the current block by performing IC on reference samples of the reference block based on the scaling factor and the offset.

2. The inter-prediction method of claim 1, wherein
   the first neighboring reference samples include first left neighboring reference samples adjacent to a left boundary of the reference block and first upper neighboring reference samples adjacent to an upper boundary of the reference block, and
   the second neighboring reference samples include second left neighboring reference samples adjacent to a left boundary of the current block and second upper neighboring reference samples adjacent to an upper boundary of the current block.

3. The inter-prediction method of claim 2, wherein
   the first left neighboring reference samples or the first upper neighboring reference samples are samples sub-sampled by a step size of 2 or greater and
   the second left neighboring reference samples or the second upper neighboring reference samples are samples sub-sampled by a step size 2 or greater.

4. The inter-prediction method of claim 2, wherein
   the current block is a non-square block,
   a first step size for the first left neighboring reference samples is different from a second step size for the first upper neighboring reference samples,
   the first step size is the same as a step size for the second left neighboring reference samples, and the second step size is the same as a step size for the second upper neighboring reference samples.

5. The inter-prediction method of claim 4, wherein
   the number of the first left neighboring reference samples is equal to the number of the first upper neighboring reference samples, and
   the number of the second left neighboring reference samples is equal to the number of the second upper neighboring reference samples.

6. The inter-prediction method of claim 5, wherein
   the ratio of the first step size and the second step size is determined based on the ratio of a height and a width of the current block.

7. The inter-prediction method of claim 2, wherein
   the first neighboring reference samples include first lower left neighboring reference samples of the reference block or first upper right reference samples of the reference block, and
   the second neighboring reference samples include second lower left neighboring reference samples of the current block or second upper right neighboring reference samples of the current block.

8. The inter-prediction method of claim 7, wherein
   when the width of the current block is greater than the height of the current block, the first neighboring reference samples include the first lower left neighboring reference samples and the second neighboring reference samples include the second lower left neighboring reference samples.

9. The inter-prediction method of claim 8, wherein
the sum of the number of the first left neighboring reference samples and the number of the first lower left neighboring reference samples is equal to the number of the first upper neighboring reference samples, and
the sum of the number of the second left neighboring reference samples and the number of the second lower left neighboring reference samples is equal to the number of the second upper neighboring reference samples.

10. The inter-prediction method of claim 2, wherein
the first neighboring reference samples include first lower left neighboring reference samples of the reference block and first upper right neighboring reference samples of the reference block, and
the second neighboring reference samples include second lower left neighboring reference samples of the current block and second upper right neighboring reference samples of the current block.

11. The inter-prediction method of claim 10, wherein
the number of the first lower left neighboring reference samples and the number of the first upper right neighboring reference samples are equal as a specific number, and the specific number is determined based on the width and height of the current block.

12. The inter-prediction method of claim 11, wherein
the specific number is determined as a half of a minimum value of the width and height.

13. The inter-prediction method of claim 1, wherein
when the current block is a non-square block and the width of the current block is greater than the height thereof, the first neighboring reference samples include only the first left neighboring reference samples adjacent to a left boundary of the reference block, and
when the current block is a non-square block and the width of the current block is smaller than the height thereof, the first neighboring reference samples include only the first upper neighboring reference samples adjacent to an upper boundary of the reference block.

14. The inter-prediction method of claim 1, further comprising:

when the IC is available for the current block, receiving an IC flag; and
determining whether the IC is applied to the current block based on the IC flag,
wherein the current block is a block split based on a quad tree binary tree (QTBT) structure, and
whether the IC is available is determined based on a size of the current block.

15. A decoding device for inter-prediction, the decoding device comprising:

a predictor deriving a motion vector of a current block, deriving a reference block for the current block based on the motion vector, the reference block positioned in a reference picture, and deriving an illumination compensation (IC) parameter based on first neighboring reference samples of the reference block and second neighboring reference samples of the current block, wherein IC parameter includes a scaling factor a and an offset b, and deriving prediction samples for the current block by performing IC on reference samples of the reference block based on the scaling factor and the offset; and
a memory storing the reference picture.

# FIG. 1

EP 3 503 553 A1

# FIG. 2

FIG. 3

(a)

(b)

EP 3 503 553 A1

# FIG. 4

Local Illumination

Reference Picture

○ light source

410

Current Picture

420

(a)

block compensated by applying reference IC

Reference Picture

○ light source

430

Current Picture

440

(b)

# FIG. 5

MV

~510

~500

neighboring sample
of reference block

neighboring sample
of current block

(a)

MV

~560

~550

neighboring sample
of reference block

neighboring sample
of current block

(b)

# FIG. 6

(a)

(b)

(c)

(d)

FIG. 7

# FIG. 8

width == height x 2

(a)

width == height x 4

(b)

FIG. 9

width < height

width > height

width == height

# FIG. 10

S1000

check IC condition

```
              YES          W == H          NO
         YES        NO                 YES        NO
         W > 16                        W > 16
```

S1010

determine neighboring reference sample

| StepX=2, StepY=2 | StepX=1, StepY=1 | StepX=2, StepY=1 (StepX=1, StepY=2) | StepX=2, StepY=1 (StepX=1, StepY=2) |

Sample Extension

calculate IC parameter — S1020

apply IC — S1030

EP 3 503 553 A1

# FIG. 11

START

search for reference block for current block — S1100

derive motion vector of current block — S1110

derive IC parameter based on first neighboring reference samples of reference block and second neighboring reference samples of current block — S1120

derive prediction samples by performing IC parameter-based illumination compensation — S1130

encode and output prediction information — S1140

END

# FIG. 12

START

derive motion vector of current block — S1200

derive reference block for current block — S1210

derive IC parameter based on first neighboring
reference samples of reference block
and second neighboring reference samples
of current block — S1220

derive prediction samples by performing IC
parameter-based illumination compensation — S1230

END

## INTERNATIONAL SEARCH REPORT

| | International application No. |
|---|---|
| | **PCT/KR2017/009547** |

**A. CLASSIFICATION OF SUBJECT MATTER**

*H04N 19/503(2014.01)i, H04N 19/105(2014.01)i, H04N 19/136(2014.01)i, H04N 19/176(2014.01)i, H04N 19/119(2014.01)i, H04N 19/70(2014.01)i*

According to International Patent Classification (IPC) or to both national classification and IPC

**B. FIELDS SEARCHED**

Minimum documentation searched (classification system followed by classification symbols)

H04N 19/503; H04N 19/186; H04N 19/51; H04N 19/597; H04N 19/136; H04N 19/70; H04N 19/105; H04N 19/117; H04N 19/103; H04N 19/176; H04N 19/119

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: inter, prediction, vector, illumination, compensation

**C. DOCUMENTS CONSIDERED TO BE RELEVANT**

| Category* | Citation of document, with indication, where appropriate, of the relevant passages | Relevant to claim No. |
|---|---|---|
| X | KR 10-1444675 B1 (SK TELECOM CO., LTD.) 01 October 2014 See paragraphs [0035]-[0069]; claims 5, 17, 28; and figures 3-6. | 1-2,7,10,14-15 |
| Y | | 3-6,8-9,11-13 |
| Y | KR 10-2013-0004133 A (SAMSUNG ELECTRONICS CO., LTD.) 09 January 2013 See paragraphs [0160]-[0176]; claim 1; and figures 17a-17c. | 3-6,8-9,11-13 |
| Y | KR 10-2016-0032126 A (QUALCOMM INCORPORATED) 23 March 2016 See paragraphs [0051], [0230]-[0245]; and figures 8, 12-13. | 4-6,8-9,11-13 |
| A | KR 10-1560182 B1 (SAMSUNG ELECTRONICS CO., LTD. et al.) 15 October 2015 See paragraphs [0223]-[0280]; claim 1; and figures 11-17b. | 1-15 |
| A | KR 10-2015-0106413 A (LG ELECTRONICS INC.) 21 September 2015 See paragraphs [0050]-[0092]; and figures 4-8. | 1-15 |

☐ Further documents are listed in the continuation of Box C.          ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 DECEMBER 2017 (07.12.2017) | **07 DECEMBER 2017 (07.12.2017)** |

| Name and mailing address of the ISA/KR | Authorized officer |
|---|---|
| Korean Intellectual Property Office Government Complex-Daejeon, 189 Seonsa-ro, Daejeon 302-701, Republic of Korea | |
| Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2017/009547**

| Patent document cited in search report | Publication date | Patent family member | Publication date |
|---|---|---|---|
| KR 10-1444675 B1 | 01/10/2014 | CN 103688543 A | 26/03/2014 |
| | | CN 103688543 B | 22/03/2017 |
| | | US 2014-0112392 A1 | 24/04/2014 |
| | | US 9516313 B2 | 06/12/2016 |
| | | WO 2013-005941 A2 | 10/01/2013 |
| | | WO 2013-005941 A3 | 14/03/2013 |
| KR 10-2013-0004133 A | 09/01/2013 | AU 2012-276410 A1 | 06/02/2014 |
| | | CA 2840488 A1 | 03/01/2013 |
| | | CN 103782596 A | 07/05/2014 |
| | | EP 2725794 A2 | 30/04/2014 |
| | | JP 05890520 B2 | 22/03/2016 |
| | | JP 2014-523698 A | 11/09/2014 |
| | | MX 2014000163 A | 19/02/2014 |
| | | MY 160463 A | 15/03/2017 |
| | | RU 2014102591 A | 10/08/2015 |
| | | RU 2604669 C2 | 10/12/2016 |
| | | SG 10201408745 A | 27/02/2015 |
| | | TW 201309036 A | 16/02/2013 |
| | | US 2014-0140401 A1 | 22/05/2014 |
| | | US 9674521 B2 | 06/06/2017 |
| | | WO 2013-002589 A2 | 03/01/2013 |
| | | WO 2013-002589 A3 | 14/03/2013 |
| KR 10-2016-0032126 A | 23/03/2016 | CA 2915114 A1 | 22/01/2015 |
| | | CN 105379288 A | 02/03/2016 |
| | | EP 3022932 A1 | 25/05/2016 |
| | | JP 2016-529791 A | 23/09/2016 |
| | | US 2015-0023422 A1 | 22/01/2015 |
| | | WO 2015-009842 A1 | 22/01/2015 |
| KR 10-1560182 B1 | 15/10/2015 | KR 10-1524465 B1 | 02/06/2015 |
| | | US 2011-0002392 A1 | 06/01/2011 |
| | | US 2012-0014449 A1 | 19/01/2012 |
| | | US 8948264 B2 | 03/02/2015 |
| | | WO 2009-088195 A2 | 16/07/2009 |
| | | WO 2009-088195 A3 | 03/09/2009 |
| | | WO 2009-088196 A2 | 16/07/2009 |
| | | WO 2009-088196 A3 | 11/09/2009 |
| KR 10-2015-0106413 A | 21/09/2015 | AU 2014-205860 A1 | 23/07/2015 |
| | | AU 2014-205860 B2 | 16/06/2016 |
| | | CA 2897299 A1 | 17/07/2014 |
| | | CN 104969556 A | 07/10/2015 |
| | | EP 2945385 A1 | 18/11/2015 |
| | | JP 06114404 B2 | 12/04/2017 |
| | | JP 2016-507972 A | 10/03/2016 |
| | | MX 2015008790 A | 15/10/2015 |
| | | RU 2015132980 A | 14/02/2017 |

Form PCT/ISA/210 (patent family annex) (January 2015)

**INTERNATIONAL SEARCH REPORT**
Information on patent family members

International application No.

**PCT/KR2017/009547**

| Patent document cited in search report | Publication date | Patent family member | Publication date |
|---|---|---|---|
| | | RU 2625526 C2 | 14/07/2017 |
| | | US 2015-0358616 A1 | 10/12/2015 |
| | | WO 2014-109547 A1 | 17/07/2014 |

Form PCT/ISA/210 (patent family annex) (January 2015)